# EUROPÄISCHE PATENTANMELDUNG

(11) **EP 3 012 712 A1**
(43) Veröffentlichungstag der Anmeldung: **27.04.2016**
(21) Anmeldenummer: 15190606.2
(22) Anmeldetag: 20.10.2015
(51) Int. Cl.: G06F 3/01, G06F 3/03

(54) **VIRTUELLES ZEICHNEN IN REALER UMGEBUNG**

(30) Priorität: 22.10.2014 DE 102014115363
(71) Anmelder: Bitsea GmbH, 53757 Sankt Augustin (DE)
(72) Erfinder: KOTULLA, Andreas, 53757 Sankt Augustin (DE)
(74) Vertreter: Braun-Dullaeus Pannen Patent- und Rechtsanwälte

(57) **Zusammenfassung**

Verfahren zum Einbringen eines virtuellen Objektes 9 in eine reale im Blickfeld eines Nutzers 1 befindliche Umgebung, wobei der Nutzer 1 die Umgebung durch ein bewegliches Beobachtungsmittel 2 hindurch betrachtet, das sein Blickfeld definiert, wobei das virtuelle Objekt 9 mittels des Beobachtungsmittels 2 in das Blickfeld eingeblendet wird,
wobei der Nutzer 1 mit einer handhabbaren Zeigespitze 3 eine Bewegung in der Umgebung innerhalb des Blickfeldes macht und damit das virtuelle Objekt 9 in der Umgebung in realer Dimensionierung und an realer Stelle skizziert,
wobei die Bewegungslinie der Zeigespitze 3 mittels einer am Beobachtungsmittel 2 befindlichen Sensorik 7 aufgenommen und anhand einer Vielzahl von Raumpunkten jeweils in Raumkoordinaten gespeichert wird, wobei die Raumkoordinaten in Bezug auf einen mit dem Beobachtungsmittel in Verbindung stehenden Referenzpunktes 6 berechnet werden,
wobei dem Nutzer 1 das von der Bewegungslinie skizzierte virtuelle Objekt 9 auf einem im Beobachtungsmittel 2 befindlichen Display in Überblendung seines Sichtfeldes dargeboten wird,
dass die Bewegungen des Beobachtungsmittels 2 im Raum mittels daran vorgesehener Bewegungssensoren 8 ermittelt und die auf den Referenzpunkt 6 referenzierten Raumkoordinaten eines jeden Raumpunktes mit entsprechenden Korrekturen versehen werden.

## Beschreibung

Die vorliegende Erfindung betrifft ein Verfahren zum Einbringen eines virtuellen Objektes in eine reale und im Blickfeld eines Nutzers befindliche Umgebung, wobei der Nutzer die Umgebung durch ein bewegliches Beobachtungsmittel betrachtet, das sein Blickfeld definiert, und wobei das virtuelle Objekt mittels des Beobachtungsmittels in das Blickfeld eingeblendet wird. Die Erfindung betrifft zudem ein System respektive eine Vorrichtung zur Umsetzung des Verfahrens.

Im Rahmen der Erfindung wird somit die visuelle Realitätswahrnehmung des Nutzers mit Hilfe des beweglichen Beobachtungsmittels und unter Nutzung von Computerleistung um virtuelle Objekte, die sich im Blickfeld befinden, erweitert. Damit ist die Erfindung dem Bereich der erweiterten Realität (augmented reality, AR) zuzuordnen.

Zwischenzeitlich sind im Rahmen der AR eine Reihe von Anwendungen im Einsatz. Einen großen Anteil haben dabei Planungs- oder Kontrollsysteme, die dem Nutzer die Möglichkeit bieten, auf Datensätzen basierende virtuelle Objekte mit der Realität zu überlagern, um die Realität mit Zusatzinformation anzureichern. Beispielsweise können einem Arzt, der einen realen Patienten vor sich hat, tomografisch erstellte Aufnahmen des Patienten an der entsprechenden Stelle des Körpers über eine Brille eingeblendet werden, so dass der Arzt durch dieses Röntgenbrille im OP "tiefere Einblicke" in den Körper des Patienten hat. Auch in der Architektur werden solche Systeme genutzt, um einem planenden Architekten seine Planungen zu visualisieren und erlebbar zu machen.

Weiterhin wird die AR bei der Präsentation von Produkten eingesetzt, die sich mittels eines Computerdisplays, insbesondere eines Tablet-PC, in die reale Umgebung von Nutzern einblenden lassen.

Allen diesen Systemen ist gemeinsam, dass die Daten zur Erzeugung der virtuellen Objekte vorhanden sind, um als solche die Realität überlagern zu können. Insofern sind freie Planungen in der Realität lediglich begrenzt möglich.

Aufgabe der vorliegenden Erfindung ist es nunmehr, ein Planungsverfahren, die sich der AR bedienen, flexibler und besonders realitätsnah zu machen. Es ist gleichfalls Aufgabe der Erfindung, eine einfach zu handhabende Vorrichtung zur Umsetzung des Verfahrens zu schaffen.

Diese Aufgaben werden durch ein Verfahren mit den kennzeichnenden Merkmalen des Anspruch 1 und eine Vorrichtung nach Anspruch 9 gelöst. Vorteilhafte Ausführungsformen der Erfindung sind in den jeweiligen Unteransprüchen genannt.

Entsprechend der Ansprüche liegt die generelle Idee der Erfindung darin, dass der Nutzer in der realen Umwelt mit der handhabbaren Zeigespitze als einer Art "elektronischem Zeichenstift" eine Zeichnung von einem Objekt im "Raum" tätigen kann. Dieses in realer Dimensionierung gezeichnete Objekt wird dann "virtuell" in das Beobachtungsmittel, beispielsweise in eine Brille, eingeblendet, so dass der Nutzer damit die reale Umgebung mit dem dorthinein überlagerten virtuellen Objekt aus seiner tatsächlichen Perspektive sieht.

Um die Zeichnung von dem Objekt im "Raum" zu machen, bewegt der Nutzer die handhabbare Zeigespitze unmittelbar in der im Blickfeld liegenden Umgebung und skizziert damit das virtuelle Objekt an realer Stelle. Der Nutzer kann beispielsweise auf dem vor ihm befindlichen leeren Tisch einen Quader in seiner Dreidimensionalität entlang seiner "tatsächlichen" Kanten skizzieren. Während des Zeichnens wird die skizzierende Bewegungslinie der Zeigespitze mittels einer am Beobachtungsmittel befindlichen Sensorik in ihrer Dreidimensionalität aufgenommen. Das kann beispielsweise mit zwei Kameras geschehen, die am Beobachtungsmittel befestigt sind und die Zeigespitze aus zwei Perspektiven verfolgen. Aus diesen zwei Perspektiven können eine Vielzahl von Raumpunkten jeweils in ihrer Dreidimensionalität erfasst und in ihren Raumkoordinaten gespeichert werden. Dabei bestimmen sich die Raumkoordinaten in Bezug auf einen mit dem Beobachtungsmittel in Verbindung stehenden Referenzpunkt, der sich in einem definierten Koordinatensystem befindet. Die Raumkoordinaten der Raumpunkte können beispielsweise von Vektoren definiert werden, die ihren Ursprung in dem Referenzpunkt haben.

Das von der Bewegungslinie skizzierte virtuelle Objekt wird dem Nutzer auf ein im Beobachtungsmittel befindliches Display dargestellt, so dass das Sichtfeld in die reale Umgebung von dem Objekt überblendet wird. Im Fall des oben genannten Quaders wird dieser so wie vom Nutzer gezeichnet auf dem Tisch befindlich dargestellt. Je nach dem, ob der Quader in der Realität vor oder hinter einem anderen auf dem Tisch befindlichen Gegenstand gezeichnet wurde, wird er entsprechend dargestellt. Probleme mit fehlerhaften Überdeckungen kann es dabei nicht geben. Der Quader konnte naturgegebenermaßen auch nicht genau an dem Ort gezeichnet werden, wo sich der andere Gegenstand auf dem Tisch befindet.

Ein ganz wesentlicher Gesichtspunkt der Erfindung ist, dass sich die Perspektive des Nutzers auf das virtuelle Objekt mit einer Veränderung seines Blickfeldes bei Bewegung des Kopfes entsprechend naturgetreu mitverändert. Das Objekt wird entsprechend der Bewegungen nachgeführt. Das geschieht dadurch, dass die Bewegungen des Beobachtungsmittels im Raum mittels daran vorgesehener Bewegungssensoren, insbesondere mittels zweier hochauflösender Gyroskope, ermittelt und die auf den Referenzpunkt referenzierten Raumkoordinaten eines jeden Raumpunktes sofort mit entsprechenden Korrekturen versehen werden. Damit bleibt das für den Nutzer in das Blickfeld gezeichnete virtuelle Objekt an der gezeichneten Stelle stehen und kann von allen Seiten betrachtet werden. Um ein flimmerfreies Bild zu erhalten, werden die Koordinaten aller Punkte mindestens 24 mal pro Sekunde neu berechnet.

Somit ermöglicht die Erfindung das "Zeichnen" virtueller Gegenstände in tatsächlicher Größe an tatsächlichem Ort innerhalb der realen Umgebung. Das geschieht in Echtzeit mittels der Zeigespitze, wobei die weitere Besonderheit der Erfindung darin liegt, dass der gezeichnete Gegenstand auch bei Drehung des Kopfes an der ursprünglichen Stelle stehen bleibt.

Ein Vorteil der Erfindung ist, dass sie das "Teilen" des virtuellen Objektes auf mehrere Nutzer mit entsprechenden Beobachtungsmitteln, beispielsweise halbdurchlässigen Brillen, in Echtzeit ermöglicht, so dass Gruppen von Nutzern in einer realen Umgebung das gleiche virtuelle Objekt betrachten können. Die Erfindung ermöglicht weiterhin die Aufzeichnung der Zeichnung in 3D, wobei eine Umrechnung in 2D nicht stattfindet.

Typische Anwendungsgebiete der Erfindung sind die Architekturplanung, die Küchenplanung, die Gartenplanung oder die Planung von Baustellen-Markierungen. Beispielsweise kann ein Architekt einen Entwurf direkt in den Raum zeichnen, an dem später die Umsetzung erfolgt. Ein Innenarchitekt kann Zeichnungen von Einrichtungsgegenständen direkt in der Wohnung an der geplanten Stelle in der vorgesehenen Größe vornehmen, die der Auftraggeber unmittelbar im richtigen Umfeld und der richtigen Dimension betrachten kann. Ebenso kann ein Gärtner Ideen in die Landschaft zeichnen, wobei er sich an das Beet knien muss, um kleine Blümchen in "Echtgröße" in das Beet zu zeichnen.

Zum einen ist es möglich, den Referenzpunkt als "externen" Referenzpunkt unabhängig vom Beobachtungsmittel als ein von der Sensorik wahrnehmbares Objekt irgendwo im Blickfeld zu deponieren. In diesem Fall ist es jedoch für die Berechnung der Raumkoordinaten notwendig, dass dieser auch bei einer Bewegung des Nutzers immer auch in der Aufnahme der Sensorik bleibt. Selbst wenn das gewährleistet würde, bliebe es allerdings nachteilig, dass für die Berechnung der Raumkoordinaten eine zusätzliche Koordinatentransformation von dem externen Referenzpunkt zu einem Referenzpunkt am Beobachtungsmittel vorgenommen werden muss.

Insofern ist es vorteilhaft, wenn der Referenzpunkt starr mit dem Beobachtungsmittel verbunden ist und seine Bewegung mittels der am Beobachtungsmittel befindlichen Bewegungssensoren direkt ermittelt wird. Dabei muss der Referenzpunkt kein sichtbares Gebilde an dem Beobachtungsmittel sein. Er kann stattdessen "virtuell" an einem zur Sensorik definiert beabstandeten Punkt definiert sein.

Allerdings kann es vorteilhaft sein, einen "externen" Referenzpunkt zu benutzen, um nach einer Unterbrechung des Verfahrens zu einem späteren Zeitpunkt ein "Wiederfinden" virtueller Objekte im Raum zu ermöglichen. Dazu muss das in einem Raum aufgenommene virtuelle Objekt einmal mit seinen gespeicherten Raumkoordinaten auf einen solchen "externen" Referenzpunkt referenziert worden sein. Der externe Referenzpunkt kann ein markantes Objekt sein, das zur Umgebung gehört oder dort hineingebracht worden ist.

In einer besonders komfortablen Ausführungsform hat das Beobachtungsmittel ein durchsichtiges Fenster, durch das hindurch der Nutzer sein Blickfeld betrachtet. Als ein solches Beobachtungsmittel bietet sich eine Brille, Kontaktlinsen oder die Projektion unmittelbar auf die Netzhaut des Auges an, da diese nicht von Hand gehalten werden brauchen. Zur Darstellung des virtuellen Objektes ist auf das Fenster ein für den Nutzer wahrnehmbares Display aufgebracht. Dieses kann in der Art eines Head-Up Displays auf das Fenster oder die Scheibe projiziert werden oder in das Fenster selber integriert sein. In dieser Ausführungsform sieht der Nutzer die Umgebung real durch das Fenster hindurch.

In einer anderen komfortablen Ausführungsform blickt der Nutzer auf eine virtuelle Umgebung, die ihm auf einem beweglichen Display, insbesondere einen Tablet-PC, dargeboten wird. Dieser "virtuellen" Umgebung wird das virtuelle Objekt überlagert. Um das zu realisieren, wird auf dem Display der von einer Kamera aufgenommene Blick in das Blickfeld und die darin eingeblendete Bewegungslinie wiedergegeben.

Vorteilhafterweise besteht die Möglichkeit, ein einmal skizziertes virtuelles Objekt grafisch zu bearbeiten. Dazu kann dem Nutzer ein Control-Panel in den oberen Bereich des Blickfeldes eingeblendet werden, das mit dem Zeigemittel bedient wird und die Manipulation des Objektes, beispielsweise ein Vergrößern, Verkleinern, Verschieben, Drehen, Einfärben oder Löschen, erlaubt. Die Möglichkeiten zur Manipulation sollten denen eines herkömmlichen Malprogrammes ähnlich sein. Das bietet auch die Möglichkeit, vorgeformte Objekte aus einer Liste solcher Objekte hinzuzufügen.

Das erfindungsgemäße Verfahren bietet den Vorteil, dass die virtuellen Objekte im Kontext mit der Umgebung als Bilder oder Videos abgespeichert werden können. Das bietet zum Einen die Möglichkeit, sie zu einem späteren Zeitpunkt an anderer Stelle auf einem Display noch einmal zu betrachten. Wie oben beschrieben, ist es mit der Nutzung eines "externen" Referenzpunktes auch möglich, das virtuelle Objekt zu einem späteren Zeitpunkt noch einmal in den Kontext der ursprünglichen Umgebung oder einer ganz anderen Umgebung zu setzen.

Ein ganz wesentlicher Vorteil der Erfindung ist, dass skizzierte virtuelle Objekte mit anderen Nutzern "geteilt" werden können. Dazu werden die Beobachtungsmittel, beispielsweise die speziellen Brillen, der anderen Nutzer innerhalb eines Systems miteinander verbunden, so dass jeder in der Gruppe die gemeinsame Zeichnung sehen kann. Wenn mehrere Brillen einer Betrachtungsgruppe zugeordnet werden, gibt es immer einen "Master", der den "globalen" Referenzpunkt im virtuellen Koordinatensystem bildet. Die weiteren Brillen berechnen Ihren eigenen Referenzpunkt immer relativ zur Master-Brille, auf die das Objekt referenziert ist. Auf diese Weise ist es möglich, dass die verschiedenen Nutzer das virtuelle Objekt jeweils aus ihrer eigenen Perspektive betrachten können.

In einer besonderen Ausführungsform macht es das System möglich, dass mehrere zu einer Gruppe gehörende Nutzer gleichzeitig mit jeweils individuellem Zeichenstift zeichnen und die virtuellen Zeichnungen jeweils in den anderen Brillen der Gruppe erscheinen. Dadurch wird es möglich gemacht, dass mehrere Nutzer gemeinsam eine virtuelle Zeichnung erstellen.

In einer vorteilhaften Ausführungsform bietet das System die Möglichkeit eines "Neustarts" nach dem Absetzen der Brille, bei dem es möglich ist, die zuvor aufgenommenen Punkte an genau derselben Stelle im Raum "wiederzufinden". Dafür ist ein "Kalibrierungsmodus" vorgesehen in dem ein Punkt genau an der Stelle gezeichnet wird, der durch den gespeicherten Abstand und den gespeicherten Winkel beschrieben wird. Wird der Kopf bewegt, so wird im Kalibrierungsmodus die Position des Punktes nicht umgerechnet, so dass sich der Punkt in Relation zum Referenzpunkt bewegt. Durch Bewegung des Kopfes kann der Nutzer nun den Punkt an diejenige Stelle im Raum positionieren, an der die Zeichnung erscheinen soll respektive vormals gezeichnet wurde. Ist der Punkt aus Nutzersicht korrekt positioniert, wird der Kalibrierungsmodus verlassen und der Punkt bleibt an der gewählten Position stehen, selbst wenn sich der Nutzer bewegt. Der Kalibrierungsmodus kann durch einen einfachen Schalter ein- und ausgeschaltet werden. Auf diese Art können auch einmal aufgenommene virtuelle Zeichnungen an beliebiger anderer Stelle projiziert werden.

Eine besondere Ausführungsform der Erfindung ist in den Figuren 1 bis 3 dargestellt und wird nachfolgend näher beschrieben. Es zeigen:
- **Figur 1**: einen Nutzer mit Zeigespitze,
- **Figur 2**: die Zeigespitze in Gestalt eines Zeichenstifts und
- **Figur 3**: ein Beobachtungsmittel in Gestalt einer speziellen Brille.

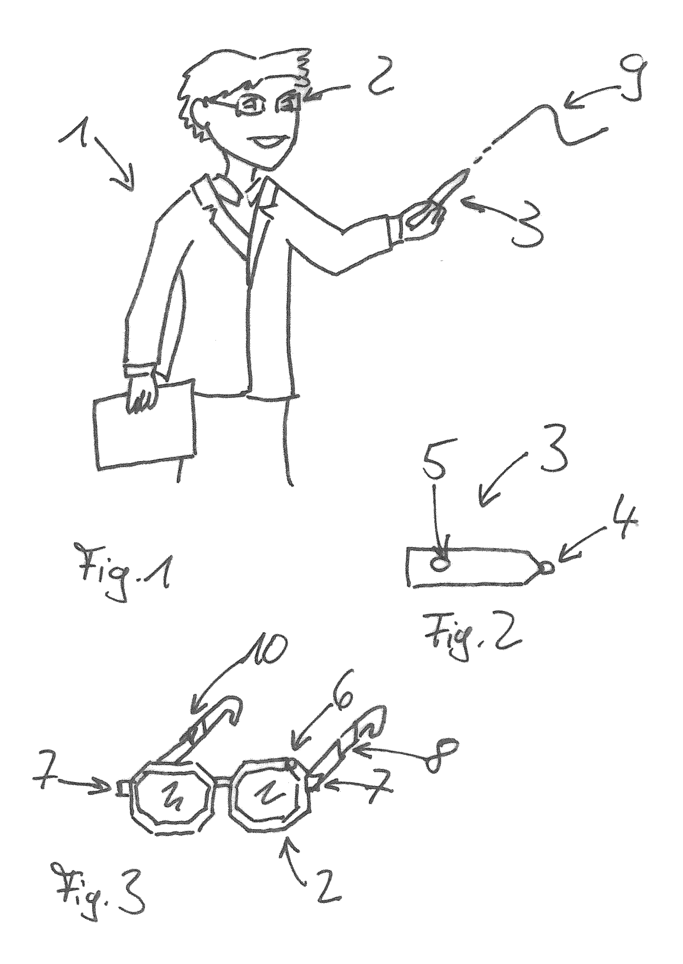

Figur 1 zeigt einen Nutzer 1, der eine spezielle Brille 2 trägt und eine handhabbare Zeigespitze in Form eines Zeichenstifts 3 in der Hand hält, mit dem er in seinem durch die Brille 2 definierten Blickfeld ein virtuelles Objekt - hier in Form einer ersten Linie 9 - frei in den Raum "zeichnet". Zum "Zeichnen" wird der Zeichenstift 3 mittels Drückens eines Knopfes 5 aktiviert. Während des Zeichnens wird quasi kontinuierlich, also in einer Folge eng aufeinanderfolgender Raumpunkte, einerseits der Abstand des Zeichenstifts 3, dessen Spitze 4 (Figur 2) jeweils einen Raumpunkt definiert, von einem Referenzpunkt 6 an der Brille (Figur 3) und der Winkel zwischen Referenzpunkt 6 und Raumpunkt gemessen und gespeichert. Der Referenzpunkt 6 an der Brille befindet sich idealerweise im Nullpunkt eines durch die Brille definierten karthesischen Koordinatensystems. Abstand und Winkel werden mittels eines an der Brille 2 befindlichen Kamerasystems 7 ermittelt. Mit den so ermittelten Daten lässt sich jeder Punkt im Raum in Relation zum Referenzpunkt 6 "einfärben".

Eine Bewegung des Kopfes wird mittels an der Brille 2 vorgesehener Beschleunigungssensoren 8 ermittelt, so dass die Bewegung des Referenzpunktes 6 im Verhältnis zu dem ursprünglich durch den Referenzpunkt definierten Koordinatensystem berücksichtigt werden kann. Mit der Bewegung wird ein jeder gezeichnete und gespeicherte Raumpunkt des virtuellen Objektes 9 umgerechnet, so dass er an derselben ursprünglichen Stelle stehen bleibt.

Der Zeichenstift 3 kann ein stiftähnlicher Funkkörper sein, mit dem der Nutzer im freien Raum zeichnen kann. Wird der Aktivierungsknopf 5 des Zeichenstiftes 3 gedrückt, wird die Linie 9 im Blickfeld nachgezeichnet, so dass eine virtuelle Zeichnung eines Objektes entsteht. Der Zeichenstift 3 erlaubt das Zeichen mit verschiedene Farben, verschiedenen Liniendicken und Linienarten (durchgezogen, gepunktet, gestrichelt,...). Diese können über ein einblendbares Menü definiert werden.

Über die Brille 2 wird dem Nutzer 1 ein Bild des gezeichneten Objektes in das Sichtfeld eingeblendet, das die Zeichnung in 3D in Echtzeit wiedergibt. Das geschieht in diesem Fall mittels an den Bügeln der Brille 2 befindlichen Projektoren 10. Dreht der Nutzer den Kopf, bleibt das Bild an der ursprünglichen Stelle stehen.

Die Position des Zeichenstiftes 3 im Raum wird anhand einer Triangulation von Signalen aus Sendern, die von der Brille 2 oder von Sensoren auf dem Kopf des Nutzers aus von drei Quellen ausgestrahlt werden, berechnet. Dabei bildet die Brille 3 selbst den Referenzpunkt des Koordinatensystems. Sind mehrere Nutzer verbunden, gibt es eine Brille, die einen "globalen" Master-Referenzpunkt definiert. Die anderen Brillen berechnen ihre jeweilige Position daraus entsprechend.

Die Projektion in die Brille ist dreidimensional, was dadurch bewirkt wird, dass das Bild in den einzelnen Gläsern leicht versetzt ist, so dass ein 3D-Effekt für den Nutzer entsteht. Die Brille ist durchsichtig mit Innenprojektion, so dass der Nutzer das reale Bild sieht, das durch die Zeichnung überlagert ist.

Die Brille nimmt Drehen oder Heben/Senken des Kopfes wahr und lässt das gezeichnete Bild an der ursprünglichen Stelle im Raum stehen. Dazu hat sie zusätzlich noch Sensoren zur Bewegungserfassung des Kopfes. Damit kann die Anzeige der berechneten Grafik an die Bewegungen des Nutzers angepasst werden.

Als Alternative zu der Brille bietet sich ein Virtual Retinal Display (VRD) an, bei dem ein Bild direkt auf die Netzhaut projiziert wird. Dabei entsteht ein Bild, als ob die Daten vor dem Auge schweben würden. Zusammen mit einer transparenten respektive transluzenten Brille kann das Auge die Umgebung und die Darstellungen der Brille gleichzeitig erfassen. Ein weiterer Vorteil ist, dass das Bild skaliert werden kann und so das gesamte Blickfeld ausgenutzt wird.

Ausgestattet mit einem "Head-Tracker" kann das Bild an die momentane Blickrichtung angepasst werden. Anhand von Referenzpunkten an dem "head mounted display" kann der Head Tracker die Kopfbewegung erfassen. Mit den gesammelten Positionsdaten des Kopfes kann das projizierte Bild in Echtzeit verändert werden. Somit entsteht auch bei Bewegung das Gefühl, Teil der Anwendung zu sein.

## Patentansprüche

1. Verfahren zum Einbringen eines virtuellen Objektes (9) in eine reale im Blickfeld eines Nutzers (1) befindliche Umgebung, wobei der Nutzer (1) die Umgebung durch ein bewegliches Beobachtungsmittel (2) hindurch betrachtet, das sein Blickfeld definiert, wobei das virtuelle Objekt (9) mittels des Beobachtungsmittels (2) in das Blickfeld eingeblendet wird,
**dadurch gekennzeichnet,**
**dass** der Nutzer (1) mit einer handhabbaren Zeigespitze (3) eine Bewegung in der Umgebung innerhalb des Blickfeldes macht und damit das virtuelle Objekt (9) in der Umgebung in realer Dimensionierung und an realer Stelle skizziert,
**dass** die Bewegungslinie der Zeigespitze (3) mittels einer am Beobachtungsmittel (2) befindlichen Sensorik (7), insbesondere aufweisend ein Kamerasystem, aufgenommen und anhand einer Vielzahl von Raumpunkten jeweils in Raumkoordinaten gespeichert wird, wobei die Raumkoordinaten in Bezug auf einen mit dem Beobachtungsmittel in Verbindung stehenden Referenzpunktes (6) berechnet werden,
**dass** dem Nutzer (1) das von der Bewegungslinie skizzierte virtuelle Objekt (9) auf einem im Beobachtungsmittel (2) befindlichen Display in Überblendung seines Sichtfeldes dargeboten wird,
**dass** die Bewegungen des Beobachtungsmittels (2) im Raum mittels daran vorgesehener Bewegungssensoren (8) ermittelt und die auf den Referenzpunkt (6) referenzierten Raumkoordinaten eines jeden Raumpunktes mit entsprechenden Korrekturen versehen werden.

2. Verfahren nach Anspruch 1,
**dadurch gekennzeichnet,**
**dass** der Referenzpunkt (7) starr mit dem Beobachtungsmittel (2) verbunden ist und seine Bewegung mittels der Bewegungssensoren (8) direkt ermittelt wird.

3. Verfahren nach Anspruch 1 oder 2,
**dadurch gekennzeichnet,**
**dass** der Nutzer (1) sein Blickfeld durch ein Beobachtungsmittel mit einem durchsichtigen Fenster, insbesondere eine Brille (2) oder eine Kontaktlinse, hindurch betrachtet, wobei auf dem Fenster ein für den Nutzer wahrnehmbares Display aufgebracht ist.

4. Verfahren nach Anspruch 1 oder 2,
**dadurch gekennzeichnet,**
**dass** der Nutzer sein Blickfeld durch ein bewegliches Display, insbesondere einen Tablet-PC, hindurch betrachtet, wobei auf dem Display der von einer Kamera aufgenommene Blick in das Blickfeld und die darin eingeblendete Bewegungslinie wiedergegeben ist.

5. Verfahren nach einem der vorherigen Ansprüche,
**dadurch gekennzeichnet,**
**dass** ein einmal skizziertes virtuelles Objekt (9) grafisch bearbeitet, insbesondere vergrößert, verkleinert, verschoben, gedreht oder gelöscht, wird.

6. Verfahren nach einem der vorherigen Ansprüche,
**dadurch gekennzeichnet,**
**dass** mehrere Nutzer mit Beobachtungsmitteln ausgestattet werden und diese Gruppe von Nutzern das gleiche virtuelle Objekt in der realen Umgebung aus verschiedenen Perspektiven betrachten kann.

7. Verfahren nach einem der vorherigen Ansprüche,
**dadurch gekennzeichnet,**
**dass** außerhalb des Beobachtungsmittels ein externer Referenzpunkt definiert wird, der das "Wiederfinden" eines virtuellen Objektes im Raum zu einem späteren Zeitpunkt zu ermöglicht, wobei das im Raum aufgenommene virtuelle Objekt mit seinen Raumkoordinaten auf den "externen" Referenzpunkt referenziert ist.

8. Verfahren nach einem der vorherigen Ansprüche,
**gekennzeichnet durch**
einen Kalibrierungsmodus, in dem ein Punkt an der Stelle gezeichnet wird, der **durch** den gespeicherten Abstand und den gespeicherten Winkel beschrieben wird, wobei bei einer Bewegung des Kopfes die Position des Punktes nicht umgerechnet wird und sich der Punkt in Relation zum Referenzpunkt bewegt.

9. System zur Durchführung des Verfahrens nach einem der vorherigen Ansprüche,
**gekennzeichnet durch**
ein bewegliches Beobachtungsmittel (2), **durch** das hindurch ein Nutzer (1) die Umgebung betrachtet, wobei Mittel vorhanden sind, ein virtuelles Objekt (9) über das Beobachtungsmittel (2) in das Blickfeld des Nutzers einzublenden,
eine vom Nutzer (1) handhabbare Zeigespitze (3) zur Skizzierung des virtuellen Objektes (9) an realer Stelle in der vom Blickfeld definierten Umgebung,
eine am Beobachtungsmittel (2) befindliche Sensorik (7), insbesondere aufweisend ein Kamerasystem, zur Aufnahme der Bewegungslinie der Zeigespitze (3),
Mittel zur Speicherung einer Vielzahl von aufgenommenen Raumpunkten der Bewegungslinie in Raumkoordinaten, wobei die Raumkoordinaten in Bezug auf einen mit dem Beobachtungsmittel in Verbindung stehenden Referenzpunkt (6) stehen,
ein im Beobachtungsmittel (2) befindlichen Display zur Darbietung des von der Bewegungslinie skizzierten virtuellen Objektes in Überblendung des Sichtfeldes des Nutzers,
und am Beobachtungsmittel (2) vorgesehene Bewegungssensoren (8) zur Ermittelung von Bewegungen des Beobachtungsmittels (2).
